# EUROPEAN PATENT APPLICATION

(11) **EP 2 787 591 A2**
(43) Date of publication of application: **08.10.2014**
(21) Application number: 14163392.5
(22) Date of filing: 03.04.2014
(51) Int. Cl.: H02J 5/00, H02J 7/02, H02J 17/00

(54) **System and Method for Determining Proximity**

(30) Priority: 05.04.2013 US 201361809068 P
(71) Applicant: Powermat Technologies Ltd., 90850 Neve Ilan (IL)
(72) Inventor: Rofe, Arik, 96224 Bet Hakerem (IL); Moshkovich, Oz, 76452 Rehovot (IL); Mach, Elieser, 90938 Rosh Tzurim (IL)
(74) Representative: Beck & Rössig European Patent Attorneys

(57) **Abstract**

A system for locating a locator device. A seeker device sends a seeker signal which is received by the locator device and the locator device is operable to transmit a locator signal when a seeker signal is received. The locator device is used to provide an indication of the location of the locator device.

## Description

### FIELD OF THE DISCLOSURE

The disclosure herein relates to a proximity determination system comprising a seeker device and a locator device.

### BACKGROUND

The use of a wireless non-contact system for the purposes of automatic identification or tracking of items is an increasingly important and popular functionality. The ability to reliably determine the level of proximity between the device tracking the item and the item itself would greatly add to the usefulness of such non-contact tracking systems.

### SUMMARY

It is according to a first aspect of the current disclosure to present a locator device configured to transmit a locator signal. The locator device may comprise: a locator energy transceiver operable to receive a seeker signal transmitted by a seeker device and to transmit a locator signal; a locator reception circuit; and a locator signal generator operable to generate the locator signal. The locator energy transceiver, the locator reception circuit and the locator signal generator may be conductively connected. Accordingly, the locator device may be operable to transmit a locator signal from the locator power transceiver following the reception of at least one seeker signal by the locator energy transceiver.

Where appropriate, the locator energy transceiver comprises an inductor, and the seeker signal and the locator signal comprise oscillating magnetic fields.

Typically, the locator device is configured to receive power for transmitting the locator signal from the seeker signal. Accordingly, the reception circuit may comprise a power storage unit operable to store power provided by the seeker signal, such that the transmission of the locator signal is capable of being powered by the seeker signals where a single seeker signal is not sufficient to power the transmission of the locator signal. Optionally, the power storage unit comprises one or more capacitors.

According to various embodiments, the locator signal may encode a locator device identifier.

Where required, the locator device may be operable to receive the seeker signal from, and transmit the locator signal to, a plurality of seeker devices.

Additionally or alternatively, the locator device may be configured to transmit the locator signal at a known power level.

Optionally, the seeker signal may encode a seeker device identifier.

For convenience, the locator device may be incorporated into a sticker or the like.
According to another aspect of the disclosure, a seeker device is introduced comprising: a seeker energy transceiver operable to transmit a seeker signal and to receive a locator signal transmitted by the locator device; a seeker signal generator connected to the seeker energy transceiver and operable to generate a seeker signal; a power source connected to the seeker signal generator and operable to provide power thereto; and a seeker reception unit connected to the seeker energy transceiver, wherein the seeker signal is operable to provide power to the locator device. Optionally, the seeker energy transceiver comprises an inductor, and the seeker signal and the locator signal comprises oscillating magnetic fields.

The seeker device may be operable to determine a proximity to the locator device transmitting the locator signal. Optionally, the power level of the locator signal as transmitted by the locator device may be dependent on the power level of the seeker signal as received by the locator device. Accordingly, the seeker reception circuit may comprise a power monitor and: the seeker signal is transmitted at a known power level; and the seeker reception circuit monitors the seeker energy transceiver during reception of the locator signal to determine a locator signal reception power level. Thus the proximity to the locator device may be determined by comparing the known seeker signal transmission power level to the locator signal reception power level.
Optionally, the seeker reception circuit comprises a power monitor and the seeker reception circuit is operable to monitor the seeker energy transceiver during transmission of the seeker signal and to determine a seeker signal transmission power level; and the seeker reception circuit is operable to monitor the seeker energy transceiver during reception of the locator signal and to determine a locator signal reception power level. Accordingly, the proximity to the locator device may be determined by comparing the determined seeker signal transmission power level to the determined locator signal reception power level.

Additionally or alternatively, the seeker reception circuit may be operable to monitor the seeker energy transceiver during reception of the locator signal and to determine a locator signal reception power level; and the locator signal is emitted by the locator device at a known transmission power level. Accordingly, the proximity to the locator device may be determined by comparing the determined locator signal reception power level to the known locator signal transmission power level.

Variously, the seeker signal may encode a seeker identifier. Optionally, the locator signal may encode a locator identifier. Additionally or alternatively, the seeker device may be operable to transmit information to a location display device.

Where appropriate, the seeker device may further comprise a proximity indicator operable to display proximity level of the locator device in relation to the seeker device. Accordingly, the proximity indicator may be selected from the group consisting of at least one LED, at least one speaker, at least one screen or the like.

Optionally, the seeker device may be incorporated into a host device. Variously, the host device may be selected from the group consisting of mobile phones, smartphones, tablet computers, keys, remote control devices, items of clothing, medicine packages and the like.

According to still another aspect of the disclosure, a software application is presented operable to display the proximity of a locator device to a seeker device comprising: a proximity data input module operable to manage the communication with one or more seeker devices and receive one or more proximity determinations; and a data visualization module operable to visualize the proximity data on a screen. Optionally, the software application may further comprise a position estimation module operable to estimate a locater device position based on the one or more proximity determinations, wherein the data visualization module is operable to visualize the estimated position.

According to yet another aspect of the disclosure, a method is taught for determining the proximity of a locator device comprising the steps of: providing a seeker device; providing a locator device; the seeker device transmitting a seeker signal; the locator device receiving the seeker signal and transmitting a locator signal in response; and the seeker device comparing the power level of the locator signal to a reference power level to calculate a level of proximity.

Variously, the reference power level may be a known transmission power level of the locator signal. Additionally or alternatively, the reference power level is the power level of the seeker signal as transmitted and the transmission power level of the locator signal is dependent on the power level of the seeker signal as received by the locator device. Accordingly, the power level of the seeker signal as transmitted by the seeker device may be a known. Furthermore, the transmission power level of the seeker signal may be measured at the time of transmission.

### BRIEF DESCRIPTION OF THE DRAWINGS

For a better understanding of the embodiments and to show how it may be carried into effect, reference will now be made, purely by way of example, to the accompanying drawings.

With specific reference now to the drawings in detail, it is stressed that the particulars shown are by way of example and for purposes of illustrative discussion of selected embodiments only, and are presented in the cause of providing what is believed to be the most useful and readily understood description of the principles and conceptual aspects. In this regard, no attempt is made to show structural details in more detail than is necessary for a fundamental understanding; the description taken with the drawings making apparent to those skilled in the art how the several selected embodiments may be put into practice. In the accompanying drawings:
Fig. 1 is a block diagram showing selected elements of a proximity determination system comprising a seeker device and a locator device.
Fig. 2 is a block diagram the seeker device communicating with the locator device from multiple locations.
Fig. 3 is a block diagram showing multiple seeker devices communicating with the locator device.

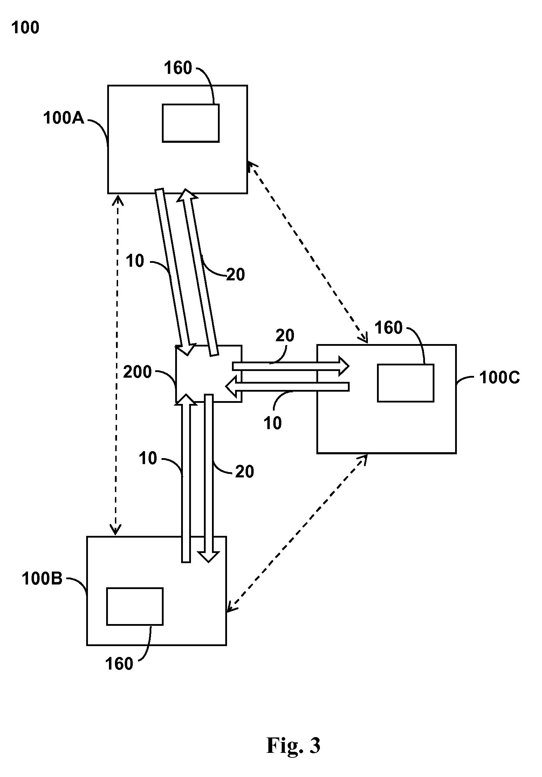

Fig. 3 is a block diagram showing multiple seeker devices communicating with the locator device.

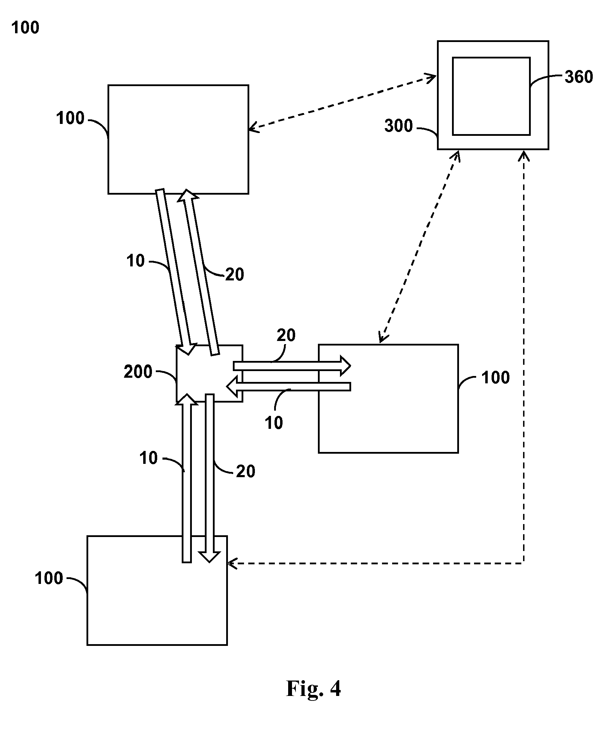

Fig. 4 is a block diagram showing multiple seeker devices communicating with the locator device, and further communicating with a display device.

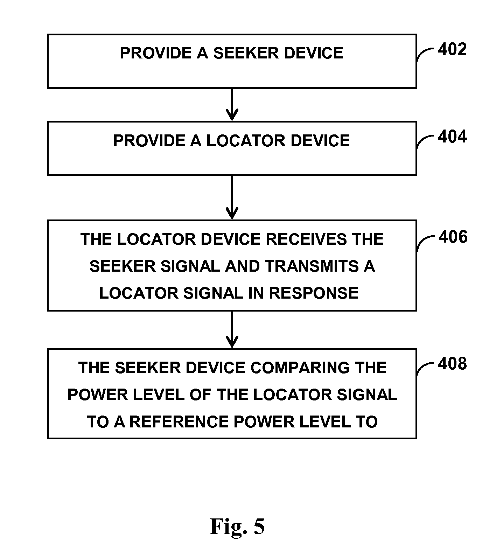

Fig. 5 is a flowchart showing a method for determining the proximity of a locator device.

### DETAILED DESCRIPTION

Aspects of the present disclosure relate to a proximity determination system comprising a seeker device and a locator device.

The seeker device may be operable to transmit a seeker signal and to receive a locator signal. The locator device may be operable to transmit a locator signal and receive a seeker signal from a seeker device. The seeker device may be configured to transmit a seeker signal a regular intervals, and in addition may be started and stopped on command by a user. The locator device may be configured to generate and transmit the locator signal upon reception of at least one seeker signal. Typically, the seeker device includes a power source, such as a mains connection or a battery (e.g., an electrochemical cell) to power the transmission of the seeker signal. The locator device may lack a power source. For the generation and transmission of the locator signal, the locator device may be operable to draw power from the seeker signals. The locator device may draw power from the seeker signal for immediate use, or alternatively, store the power from the seeker signal reception into a power storage unit, which then powers the generation and transmission of the locator device. As such, the seeker device is configured to seek the locator device by transmitting a "call" in the form of seeker signals, and a locator device that receives the seeker signal is configured to respond to the call by transmitting the locator signal, thus signaling the seeker device of its proximity.

The seeker device and/or the locator device may be operable to determine a level of proximity between the two devices. The determination of the level of proximity may be based on the attenuation of the seeker signal and/or the locator signal over transmission distance. Further, one or both devices may further comprise a proximity indicator to indicate said level of proximity. The proximity indicator may be as simple as a Light Emitting Diode (LED) indicator light, a speaker or the like configured to emit light or sound pulses in increasing frequency with increasing proximity, or as complex as an augmented reality set up, where the proximity indicator comprises a screen showing images taken from a camera, with the proximity level of a locator device superimposed upon the images.

The seeker device may be incorporated into a host device, and be incorporated together with an inductive power receiver such as those integrated into backdoors of mobile phones, retrofittable receiver units, skins or the like. It is further noted that the seeker device may be integrated into retrofittable inserts or the like such as various platforms described in the applicants' co-pending patent application PCT/IL2012/050544 titled, "System and Method for Providing Wireless Power Transfer Functionality to an Electrical Device" which is incorporated herein by reference. Other electronic elements may be assembled on the main board of a mobile device by a third party. The shape of host electrical devices, such as telephones, tablet computers, media players or the like, and the interface of the seeker device to the host electrical device may vary from model to model and customization may be provided for each model as required. Customization units may be provided as evaluation boards and accompanying reference design.

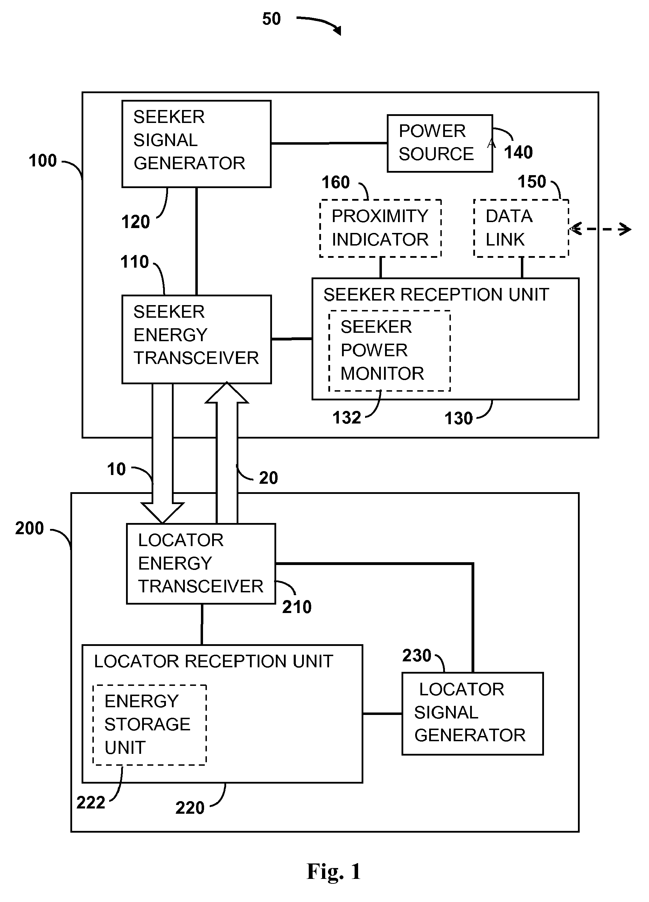

With reference to Figure 1, the present disclosure provides for a proximity determination system 50 comprising one or both of a seeker device 100 and a locator device 200, as described herein.

### Locator device

With further reference to Figure 1, the present disclosure provides for a locator device 200 configured to transmit a locator signal 20 comprising: a locator energy transceiver 210 operable to receive a seeker signal 10 transmitted by a seeker device 100 and to transmit a locator signal 20; a locator reception circuit 220; and locator signal generator 230 operable to generate said locator signal 20. The locator energy transceiver 210, the locator reception circuit 220 and the locator signal generator 230 may be conductively connected with each other, and the locator device 200 may be operable to transmit a locator signal 20 through the locator power transceiver 210 following the reception of at least one seeker signal 10 by the locator energy transceiver 210.

The locator energy transceiver 210 may be an inductor, with the seeker signal 10 and the locator signal 20 comprising oscillating magnetic fields. As such, the locator energy transceiver 210 may be configured to generate the locator signal 20 by passing an alternating current and thus creating an oscillating magnetic field. Conversely, the presence of a seeker signal 10 in the form of an oscillating magnetic field may induce a secondary current in the locator energy transceiver 210.

The locator device 200 may be operable to receive power from the seeker signal 10. The seeker signal 10 may be of a form that is transformed into an electric current by the locator energy transceiver 210. Where the seeker signal 10 is an oscillating magnetic field, and the locator energy transceiver 210 is an inductor, the secondary current induced in the locator energy transceiver 210 may be used to provide power to various components within the locator device 200 as needed, for example, to the locator signal generator 230 to generate the locator signal 20 and transmit it through the locator energy transceiver 210.

The locator reception circuit 220 may include a power storage unit 222 operable to store power provided by the seeker signal 10 through the locator power transceiver 210. The power storage unit 222 may enable the locator device 200 to draw power from the seeker signals 10 it receives, without being temporally limited to using that drawn power at the time of reception. In addition, the power storage unit 222 may allow the locator device 200 to harvest power from multiple seeker signals 10 over time, allowing the seeker signal 10 to provide power for operations that demand more energy than can be provided by a single seeker signal 10. Further, the seeker signal 10, as received, may weaken with increased distance between the seeker device 100 and the locator device 200, as well as with suboptimal orientation between the locator power transceiver 210 and a seeker power transceiver 110 (e.g., in the case where the transceivers are inductors). Thus, the locator device 200 with a power storage unit 222 may be responsive to seeker signals 10 transmitted from seeker devices 100 that are farther away. As such, the transmission of the locator signal 20 may be capable of being powered by said seeker signals 10 where a single seeker signal 10 is not sufficient to power the transmission of the locator signal 20.

The power storage unit 222 may comprise any power storage unit known in the art. Optionally, the power storage unit 222 stores electrical charge, and may comprise, e.g., a chargeable electrochemical cell, capacitors, fuel cells, batteries and the like.

Optionally, the seeker signal may comprise a series of pulses transmitted by the seeker device. So, for example, the seeker device may be configured and operable to send a series of seeker pulses at regular or irregular intervals. In one example, regular seeker pulses may be sent at, between 2 to 10 millisecond intervals, say at 5 millisecond intervals, although other intervals may be considered.

Accordingly, the locator device may be operable to receive a plurality of seeker pulses, and to store the energy received therefrom in an energy storage unit, such as a capacitor or the like. The stored energy may be monitored such that when the stored energy exceeds a reference level, the locator device may be triggered to transmit the locator signal, possibly having a known power level.

The locator device 200 may be operable to receive the seeker signal 10 from, and transmit the locator signal 20 to, a plurality of seeker devices 100.

The locator signal 200 may be used by the seeker device 100 to determine the level of proximity between it and the locator device 200. As such, the locator signal 20 may be characterized in a way that enables the seeker device 100 to determine said level of proximity. The locator device 200 may be configured to transmit the locator signal 20 at a known, predetermined power level, regardless of the amount of power the locator device 200 collects from one seeker signal 10. In fact, the power level of the transmitted locator signal 20 may exceed the power collected by the locator device 200 from a single seeker signal 10. Alternatively, the power level of the locator signal 20 may correspond to the amount of power received from the reception of the seeker signal 10.

The locator device 200 may be useful for locating small objects that may be misplaced or lost. Such objects, into which the locator device 200 may be incorporated, may include, without limitation, mobile devices such as mobile phones, smartphones, and tablet computers, as well as keys, remote control devices, items of clothing, medicine packages and the like. Alternatively, the locator device 200 may be incorporated into a tag or a sticker, such that any object may be retrofitted with the capabilities of the locator device 200.

### Seeker device

With further reference to Figure 1, the present disclosure provides for a seeker device 100 comprising: a seeker energy transceiver 110 operable to transmit a seeker signal 10 and to receive a locator signal 20 transmitted by the locator device 200; a seeker signal generator 120 connected to the seeker energy transceiver 110 and operable to generate a seeker signal 10; a power source 140 connected to the seeker signal generator 120 and operable to provide power thereto; and a seeker reception unit 130 connected to the seeker energy transceiver 110, wherein the seeker signal 10 is operable to provide power to the locator device 200.

The seeker energy transceiver 110 may be an inductor, with the seeker signal and the locator signal comprising oscillating magnetic fields. As such, the seeker energy transceiver 110 may be configured to generate the seeker signal 10 by passing an alternating current and thus creating an oscillating magnetic field. Conversely, the presence of a locator signal 20 in the form of an oscillating magnetic field may induce a secondary current in the seeker energy transceiver 110.

The seeker device 100 may be operable to determine a level of proximity to the locator device. The determination of the level of proximity may be based on the attenuation of the locator signal, or of the seeker signal, over distance. There are various ways in which the seeker signal 20 and/or the locator signal 10 may be used to determine the inter-device distance.

In certain embodiments, the power level of the locator signal 20 as transmitted by the locator device 200 may be dependent on the power level of the seeker signal 10 as received by the locator device 200. In such a configuration:
- The seeker reception circuit 130 may comprise a seeker power monitor 132. The seeker signal 10 may be transmitted at a known power level, and when the locator signal 20 is returned, the seeker reception circuit 130 may monitor the seeker energy transceiver 110 during reception of the locator signal 20 to determine a locator signal reception power level. The proximity to the locator device 200 may then be determined by comparing the known seeker signal transmission power level to the locator signal reception power level (i.e., the power level as received by the seeker device).
- The seeker reception circuit 130 may comprise a power monitor 132. The seeker reception circuit 130 may be operable to monitor the seeker energy transceiver 110 during transmission of the seeker signal 10 and determine a seeker signal transmission power level. Further, the seeker reception circuit 130 may be operable to monitor the seeker energy transceiver 110 during reception of the locator signal 20 and determine a locator signal reception power level. (i.e., the power level as received by the seeker device). The proximity to the locator device 200 may then be determined by comparing the determined seeker signal transmission power level to the determined locator signal reception power level.

In certain embodiments, the power level of the locator signal 20 as transmitted by the locator device 200 may be independent on the power level of the seeker signal 10 as received by the locator device 200, and further, the locator device 200 may be configured to transmit the locator signal 20 at a known and predetermined power level. In such a configuration:
- The seeker reception circuit 130 may comprise a power monitor 132. The seeker reception circuit 130 may be operable to monitor the seeker energy transceiver 110 during reception of the locator signal 20 and to determine a locator signal reception power level. The proximity to the locator device 200 may then be determined by comparing the locator signal reception power level as determined by the seeker reception circuit with the known locator signal transmission power level.

The seeker signal 10 may encode information regarding the seeker device 100, including but not limited to a seeker device identifier, one or more parameters regarding the type of host device the seeker device is associated with, and the like.

The seeker device 100 may further include a proximity indicator 160. The proximity indicator may be any device, component or item associated with the seeker device 100 that is capable of indicating the proximity of the seeker device 100 to the locator device 200 that is transmitting a locator signal. The proximity indicator 160 may be, e.g., one or more LEDs. A single LED may be configured to be inactive where no locator signal 200 is detected by the seeker device 100, and activate brief pulses at a range of frequencies corresponding to the level of proximity when a locator signal 200 is detected. The LED may flash at a higher frequency when the locator device 200 is closer to the seeker device 100, up to being constant on when the locator device 200 is very close to the seeker device 100. A similar frequency code may be utilized where the proximity indicator 160 is a speaker that generates a sound at a higher pitch, or a higher frequency of short should pulses, corresponding to a higher level of proximity. Alternatively, the proximity indicator 160 may include multiple LEDs, where the number of LEDs that are activated increase with increased proximity, or different colored LEDs are activated with increased proximity (e.g., none to green to yellow to red, with increased proximity).

Alternatively, the proximity indicator 160 may be a visual display in a screen, e.g., on a mobile device in which the seeker device is incorporated. The displaying of the proximity information on a screen may be mediated by a software application.

Further, to enable the communication of proximity determinations and other related information among multiple seeker devices, the seeker device 100 may further include a data link 150 operable to transmit and/or receive information between other seeker devices 100.

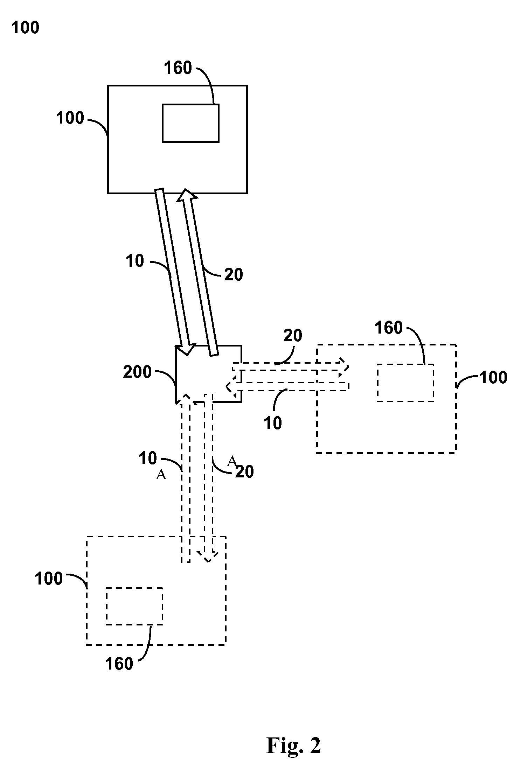

The seeker device 100 may be operable to combine multiple proximity determinations to estimate a locator device position through, e.g., triangulation. The multiple proximity determinations are typically from multiple seeker device positions. The multiple seeker device positions may be achieved in one of two ways. As shown in Figure 2, one seeker device 100 may make multiple proximity determinations over time and over multiple locations. Alternatively, as shown in Figure 3, multiple seeker devices 100A-C may each make one or more proximity determinations, then at least one seeker device 100A-C may receive the resulting multiple proximity determinations via the data links in the respective seeker devices 100A-C and combine them to estimate the location of the locator device.

As such, the proximity indicator 160 may be operable to display a position. The position of the locator device 200 may indicated, e.g., as point or a region on a graphical representation of the space around the locator device, e.g., a map. Alternatively, the position of the locator device 200 may be displayed as augmented reality.

It is noted that in order to determine the position of the locator device relative or absolute positions of the multiple seeker devices may be required. Accordingly, the seeker devices may further include self-orientating units such as satellite positioning devices, e.g. GPS or the like configured and operable to determine the positions of the seeker device. Alternatively, where the seeker devices are generally stationary devices, their fixed position may be known.

With reference to Figure 4, it will be appreciated that with a data link 150, the presentation of a proximity determination or an estimated position may be done in a separate display device 300 that is not itself a seeker device. The display device may or may not include components for emitting seeker signals or receiving locator signals. As such, the display device 300 may be any device with a proximity indicator 360, e.g., a screen display, and operable to run a software application capable of processing the proximity determinations provided by one or more seeker devices 100 through a data link, calculate estimated position, and display proximity and/or position on the screen display. The proximity indicator 360 associated with the display device 300 may indicate proximity or position as described with reference to Figure 1, with respect to the proximity indicator 160 in the seeker device 100.

The display device 300 may be situated remotely from the seeker devices 100 it receives the proximity determinations from. For example, the display device 300 may be a networked computer in one location, while the seeker devices and the locator devices may be in a separate room or even in a different location entirely, thousands of miles away.

The seeker device 100 may be incorporated into a mobile device, such as a smartphone, tablet and the like. Alternatively, the seeker device 100 may be a dedicated device with a data link 150 but lacking a proximity indicator 160, such that it is operable to relay any proximity determination via the data link 150 to another device, e.g., another seeker device 100 or a display device 300, that comprises a proximity display.

### Software Application

The present disclosure further provides a software application operable to display the proximity of a locator device to a seeker device, or alternatively or in addition, to a location of the locator device. The software may comprise a proximity data input module operable to manage the communication with one or more seeker devices and receive one or more proximity determinations, optionally a position estimation module operable to estimate a locater device position based on the proximity determinations, and a data visualization module operable to visualize the proximity and/or position data on a screen.

### Methods of determining locater device proximity

The present disclosure further provides methods for determining the proximity of a locator device.

With reference to Figure 5, the method may comprise the steps of: providing a seeker device (402); providing a locator device (404); the seeker device transmitting a seeker signal (406); the locator device receiving the seeker signal and transmitting a locator signal in response (408); and the seeker device comparing the power level of the locator signal to a reference power level to calculate a level of proximity.

Optionally, where the seeker device is operable to send a series of seeker pulses at regular or irregular intervals, the locator device may be operable to receive a plurality of seeker pulses, and to store the energy received therefrom in an energy storage unit, such as a capacitor or the like. The locator device may be further operable to monitor the stored energy and to trigger the locator signal when sufficient power has been stored.

The reference power level may be a known transmission power level of the locator signal. That is, the locator device may be configured to transmit the locator signal in a known a predefined power level. Alternatively, the reference power level may be the power level of the seeker signal as transmitted, where the transmission power level of the locator signal is dependent on the power level of the seeker signal as received by the locator device. The power level of the seeker signal as transmitted by the seeker device may be a known and predetermined power level. Alternatively, the transmission power level of the seeker signal may be measured at the time of transmission.

The methods and systems described herein may be deployed in part or in whole through a machine or device that executes computer software, program codes, and/or instructions on a processor. The processor may be part of a server, client, network infrastructure, mobile computing platform, stationary computing platform, or other computing platform. The processor may include memory that stores methods, codes, instructions and programs as described herein and elsewhere. The processor may access a storage medium through an interface that may store methods, codes, and instructions as described herein and elsewhere. The storage medium associated with the processor for storing methods, programs, codes, program instructions or other type of instructions capable of being executed by the computing or processing device may include but may not be limited to one or more of a CD-ROM, DVD, memory, hard disk, flash drive, RAM, ROM, cache and the like.

The methods and systems described herein may be deployed in part or in whole through a machine that executes computer software on a server, client, firewall, gateway, hub, router, or other such computer and/or networking hardware.

The server may provide an interface to other devices including, without limitation, clients, other servers, printers, database servers, print servers, file servers, communication servers, distributed servers and the like. Additionally, this coupling and/or connection may facilitate remote execution of program across the network. The networking of some or all of these devices may facilitate parallel processing of a program or method at one or more location without deviating from the scope of the invention. In addition, any of the devices attached to the server through an interface may include at least one storage medium capable of storing methods, programs, code and/or instructions. A central repository may provide program instructions to be executed on different devices. In this implementation, the remote repository may act as a storage medium for program code, instructions, and programs.

The client may provide an interface to other devices including, without limitation, servers, other clients, printers, database servers, print servers, file servers, communication servers, distributed servers and the like. Additionally, this coupling and/or connection may facilitate remote execution of program across the network. The networking of some or all of these devices may facilitate parallel processing of a program or method at one or more location without deviating from the scope of the invention. In addition, any of the devices attached to the client through an interface may include at least one storage medium capable of storing methods, programs, applications, code and/or instructions. A central repository may provide program instructions to be executed on different devices. In this implementation, the remote repository may act as a storage medium for program code, instructions, and programs.

The methods and systems described herein may be deployed in part or in whole through network infrastructures. The network infrastructure may include elements such as computing devices, servers, routers, hubs, firewalls, clients, personal computers, communication devices, routing devices and other active and passive devices, modules and/or components as known in the art. The computing and/or non-computing device(s) associated with the network infrastructure may include, apart from other components, a storage medium such as flash memory, buffer, stack, RAM, ROM and the like. The processes, methods, program codes, instructions described herein and elsewhere may be executed by one or more of the network infrastructural elements.

The methods, program codes, and instructions described herein and elsewhere may be implemented on a cellular network having multiple cells. The cellular network may either be frequency division multiple access (FDMA) network or code division multiple access (CDMA) network. The cellular network may include mobile devices, cell sites, base stations, repeaters, antennas, towers, and the like. The cell network may be a GSM, GPRS, 3G, EVDO, mesh, or other networks types.

The methods, programs codes, and instructions described herein and elsewhere may be implemented on or through mobile devices. The mobile devices may include navigation devices, cell phones, mobile phones, mobile personal digital assistants, laptops, palmtops, netbooks, tablets, pagers, electronic books readers, music players and the like. These devices may include, apart from other components, a storage medium such as a flash memory, buffer, RAM, ROM and one or more computing devices. The computing devices associated with mobile devices may be enabled to execute program codes, methods, and instructions stored thereon.

The methods and systems described herein may transform physical and/or or intangible items from one state to another. The methods and systems described herein may also transform data representing physical and/or intangible items from one state to another.

The elements described and depicted herein, including in flow charts and block diagrams throughout the figures, imply logical boundaries between the elements. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it will be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The scope of the disclosed embodiments may be defined by the appended claims and includes both combinations and sub combinations of the various features described hereinabove as well as variations and modifications thereof, which would occur to persons skilled in the art upon reading the foregoing description.

Technical and scientific terms used herein should have the same meaning as commonly understood by one of ordinary skill in the art to which the disclosure pertains. Nevertheless, it is expected that during the life of a patent maturing from this application many relevant systems and methods will be developed.

As used herein the term "about" refers to at least ± 10 %.

The terms "comprises", "comprising", "includes", "including", "having" and their conjugates mean "including but not limited to" and indicate that the components listed are included, but not generally to the exclusion of other components. Such terms encompass the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" may include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween. It should be understood, therefore, that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6 as well as non-integral intermediate values. This applies regardless of the breadth of the range.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present disclosure. To the extent that section headings are used, they should not be construed as necessarily limiting.

## Claims

1. A locator device (200) configured to transmit a locator signal (20), comprising:
a. a locator energy transceiver (210) operable to receive a seeker signal transmitted by a seeker device and to transmit a locator signal;
b. a locator reception circuit (220); and
c. a locator signal generator (230) operable to generate said locator signal,
said locator energy transceiver, said locator reception circuit and said locator signal generator being conductively connected, wherein
the locator device is operable to transmit a locator signal from the locator power transceiver following the reception of at least one seeker signal (10) by the locator energy transceiver.

2. The locator device of claim 1, wherein the reception circuit comprises a power storage unit (222) operable to store power provided by the seeker signal, such that the transmission of the locator signal is capable of being powered by said seeker signals.

3. The locator device of claim 1 or 2 incorporated into a sticker.

4. A seeker device (100), comprising:
a. a seeker energy transceiver (110) operable to transmit a seeker signal (10) and to receive a locator signal (20) transmitted by the locator device;
b. a seeker signal generator (120) connected to the seeker energy transceiver and operable to generate a seeker signal;
c. a power source (140) connected to the seeker signal generator and operable to provide power thereto; and
d. a seeker reception unit (130) connected to the seeker energy transceiver, wherein
the seeker signal is operable to provide power to the locator device.

5. The seeker device of claim 4, wherein the seeker reception circuit comprises a power monitor and:
a. the seeker signal is transmitted at a known power level ; and
b. the seeker reception circuit is operable to monitor the seeker energy transceiver during reception of the locator signal and to determine a locator signal reception power level;
and wherein the proximity to said locator device is determined by comparing the known seeker signal transmission power level to the locator signal reception power level.

6. The seeker device of claim 4 or 5, wherein the seeker reception circuit comprises a power monitor and
a. the seeker reception circuit is operable to monitor the seeker energy transceiver during transmission of the seeker signal and to determine a seeker signal transmission power level ; and
b. the seeker reception circuit is operable to monitor the seeker energy transceiver during reception of the locator signal and to determine a locator signal reception power level;
wherein the proximity to said locator device is determined by comparing the determined seeker signal transmission power level to the determined locator signal reception power level.

7. The seeker device of claim 4, wherein:
a. the seeker reception circuit is operable to monitor the seeker energy transceiver during reception of the locator signal and to determine a locator signal reception power level;
b. the locator signal is emitted by the locator device at a known transmission power level;
wherein the proximity to said locator device is determined by comparing the determined locator signal reception power level to the known locator signal transmission power level.

8. The device of one of claims 1 to 7, wherein the locator said energy transceiver comprises an inductor, and the seeker signal and the locator signal comprise oscillating magnetic fields.

9. The device of one of claims 1 to 8, wherein the seeker signal encodes a seeker identifier.

10. The device of one of claims 1 to 9, wherein the locator signal encodes a locator identifier.

11. A method for determining the proximity of a locator device comprising the steps of: providing a seeker device; providing a locator device; the seeker device transmitting a seeker signal; the locator device receiving the seeker signal and transmitting a locator signal in response; and the seeker device comparing the power level of the locator signal to a reference power level to calculate a level of proximity.

12. The method of claim 11, wherein the reference power level is a known transmission power level of the locator signal.

13. The method of claim 11, wherein the reference power level is the power level of the seeker signal as transmitted and the transmission power level of the locator signal is dependent on the power level of the seeker signal as received by the locator device.

14. The method of claim 11, wherein the power level of the seeker signal as transmitted by the seeker device is a known.

15. The method of claim 11, wherein the transmission power level of the seeker signal is measured at the time of transmission.
